# EUROPÄISCHE PATENTSCHRIFT

(11) **EP 0 301 531 B1**
(45) Veröffentlichungstag und Bekanntmachung des Hinweises auf die Patenterteilung: **22.06.1994**
(21) Anmeldenummer: 88112196.6
(22) Anmeldetag: 28.07.1988
(51) Int. Cl.: B01D 19/04

(54) **Verwendung einer Zusammensetzung als Antischaummittel**
Use of a composition as anti-foam agent
Utilisation d'une composition comme agent antimousse

(30) Priorität: 30.07.1987 DE 3725322
(43) Veröffentlichungstag der Anmeldung: 01.02.1989
(73) Patentinhaber: WACKER-CHEMIE GMBH, D-81737 München (DE)
(72) Erfinder: Innertsberger, Ernst, Dipl.-Chem., D-8263 Burghausen (DE); Schmidlkofer, Jakob, D-8261 Mehring-Öd (DE); Huber, Peter, Dr., Dipl.-Chem., D-8263 Burghausen (DE); Burger, Willibald, Dr., Dipl.-Chem., D-8263 Burghausen (DE); Schulze, Joachim, Dr., Dipl.-Chem., D-8263 Burghausen (DE)

(56) Entgegenhaltungen:
- EP-A- 0 106 209
- EP-A- 0 163 398
- EP-A- 0 254 499
- EP-A- 0 270 273
- DE-A- 1 545 185
- DE-A- 1 619 859
- DE-B- 2 310 039

## Beschreibung

### Beschriebung für folgende Vertragsstaaten : BE, DE, FR, GB, IT

Die Erfindung betrifft die Verwendung von unerwünscht starke Schaumbildung verhütenden Mitteln und Zusätzen, welche insbesondere für den Einsatz in Waschmitteln geeignet sind. Diese Antischaummittel sind herstellbar auf der Grundlage von im wesentlichen linearem Organopolysiloxan, im wesentlichen aus Triorganosiloxy- und SiO_{4/2} - Einheiten bestehendem Siliconharz sowie Füllstoff(en).

In US-A-3 455 839 (ausgegeben am 15. Juli 1969, L.A. Rauner, Dow Corning Corp.) sind schaumreduzierende Mischungen aus einem Polydimethylsiloxanfluid, einem aus Trimethylsiloxy- und SiO_{4/2} - Einheiten bestehendem Harz sowie SiO₂ - Aerogel beschrieben. Aus EP-A-106 209 (publiziert am 25. April 1984, E. Innertsberger et al., Wacker-Chemie GmbH) sind Antischaummittel auf der Grundlage von Organopolysiloxan mit SiOC-gebunden organischen Resten, Füllstoff, Dispergiermittel und Siliconharz bekannt, welche bevorzugt wesentliche Mengen an 2,2,4 - Trimethyl-1,3-diisobutyryloxypentan enthalten.

In EP-A 254 499 (publiziert am 27. Januar 1988, T. Miura, Dow Corning K.K.) und EP-A 270 273 (publiziert am 08. Juni 1988, K. Aizawa, Dow Corning K.K.) (jeweils Stand der Technik nach Artikel 54(3) EPÜ für die Vertragsstaaten BE, DE, FR, GB und IT) sind Verfahren zur Herstellung von Antischaummitteln bekannt, bei denen Gemische von linearen Polyorganosiloxanen, Polyorganosiloxanen mit SiOC-gebundenen Resten, Siliconharzen und/oder Teilhydrolysaten von Alkylchlorsilanen mit Katalysator in Gegenwart von Füllstoff umgesetzt werden.

Aufgabe der vorliegenden Erfindung war es Zusammensetzungen für die Verwendung als Antischaummittel zur Verfügung zu stellen. Insbesonders war es Aufgabe der vorliegenden Erfindung, Zusammensetzungen für die Verwendung als Antischaummittel für Waschmittel zur Verfügung zu stellen, deren Wirkung im Laufe des Waschvorgangs nur wenig nachläßt. Des weiteren war es Aufgabe der vorliegenden Erfindung, Zusammensetzungen für die Verwendung als Antischaummittel zur Verfügung zu stellen, die in einer Waschmittel-Slurry so stabil sind, daß diese Antischaummittel dem Waschmittel bereits vor dem Sprühtrocknen der Slurry zugegeben werden können.

Diese Aufgaben werden durch den gegenstand von Anspruch 1 gelöst.

Beispiele für Kohlenwasserstoffreste R sind Alkylreste, wie der Methyl-, Ethyl-, n-Propyl-, Isopropyl, n-Butyl- und sec.-Butylrest sowie Octadecylreste; Alkenylreste, wie der Vinylrest; Cycloalkylreste, wie der Cyclohexylrest und Methylcyclohexylreste; Arylreste, wie der Phenylrest; Aralkylreste, wie der 2-Phenylpropylrest und Alkarylreste, wie Tolylreste.

Beispiele für substituierte Kohlenwasserstoffreste R sind insbesondere halogenierte Kohlenwasserstoffreste, wie der 3,3,3-Trifluorpropylrest und o-, p- und m-Chlorphenylreste.

Insbesondere wegen der leichteren Zugänglichkeit sind vorzugsweise mindestens 80% der Anzahl der SiC-gebundenen Reste in den Organopolysiloxanen der als Antischaummittel verwendeten Zusammensetzung Methylreste.

Vorzugsweise sind die aus Kohlenstoff-, Wasserstoff- und mindestens 2 Sauerstoffatomen je Rest sowie gegebenenfalls auch mindestens einem Si-Atom aufgebauten SiOC-gebundenen Reste R' mit jeweils mindestens 6 Kohlenstoffatomen je Rest einwertig. Sie können aber auch zweiwertig sein.

Vorzugsweise enthalten die SiOC-gebundenen, aus Kohlenstoff- und Wasserstoffatomen aufgebauten Reste mit mindestens 6 Kohlenstoffatomen je Rest höchstens 30 Kohlenstoffatome je Rest. Weiterhin ist bevorzugt, daß diese Reste Alkylreste sind, wie der n-Hexyl-, 2-Ethylhexyl-, Lauryl-, Isotridecyl- und 2-Octyldodecylrest, oder Cycloalkylreste sind, wie Methylcyclohexylreste. Diese Reste können aber auch z.B. aus Kohlenstoff- und Wasserstoffatomen aufgebaute Reste mit aliphatischer Mehrfachbindung, wie der Oleylrest; Arylreste, wie der Phenylrest; Aralkylreste, wie der Benzylrest; oder Alkarylreste, wie Tolylreste, sein.

Vorzugsweise sind in den SiOC-gebundenen, aus Kohlenstoff-, Wasserstoff- und mindestens 2 Sauerstoffatomen je Rest sowie gegebenenfalls auch mindestens einem Si-Atom aufgebauten Resten mit mindestens 6 Kohlenstoffatomen je Rest mindestens 2 der Sauerstoffatome Ethersauerstoffatome. Weiterhin ist bevorzugt, daß diese Reste ein Molekulargewicht von 100 bis 20 000 besitzen.

Beispiele für SiOC-gebundene, aus Kohlenstoff-, Wasserstoff- und mindestens 2 Sauerstoffatomen je Rest sowie gegebenenfalls auch mindestens einem Si-Atom aufgebaute Reste mit mindestens 6 Kohlenstoffatomen je Rest sind Polyethylenglykole, Propylenoxydeinheiten, wobei diese verschiedene Einheiten in Blöcken vorliegen oder statistisch verteilt sein können. Wenn diese Reste nicht zweiwertig sind, was ohnehin nicht bevorzugt ist, ist das Sauerstoffatom, das sich am anderen Ende als das mit einem Si-Atom verknüpfte Sauerstoffatom befindet, vorzugsweise an einen Alkylrest, wie den Methyl- oder n- oder tert.-Butylrest, gebunden. Es kann aber auch z.B. an einen Acylrest, wie den Acetylrest oder z.B. an einen Trimethylsilylrest gebunden sein.

Die Herstellung der im wesentlichen linearen Organopolysiloxane, in denen zusätzlich zu den SiC-gebundenen organischen Resten gleiche oder verschiedene, SiOC-gebundene, aus Kohlenstoff- und Wasserstoffatomen und/oder aus Kohlenstoff-, Wasserstoff- und mindestens 2 Sauerstoffatomen je Rest sowie gegebenenfalls auch mindestens einem Si-Atom aufgebaute Reste R' mit jeweils mindestens 6 Kohlenstoffatomen je Rest vorliegen, kann in bekannter bzw. an sich bekannter Weise beispielsweise durch Kondensation von Si-gebundene Hydroxylgruppen aufweisenden Organopolysiloxanen mit Alkoholen der allgemeinen Formel

R'OH,

wobei R' die oben angegebene Bedeutung hat, in Gegenwart von sauren oder alkalischen Katalysatoren, wie säurebehandeltem Bentonit oder methanolischem Kaliumhydroxyd, erfolgen.

Es kann eine Art von im wesentlichen linearem Organopolysiloxan, in dem SiOC-gebundene organische Reste der oben definierten Art vorliegen, zur Herstellung der Zusammensetzung verwendet werden. Es können aber auch mindestens zwei verschiedene Arten von Organopolysiloxanen mit solchen SiOC-gebundenen Resten verwendet werden. Es ist bevorzugt, daß derartiges Organopolysiloxan eine durchschnittliche Viskosität von 50 bis 500 000 mm².s⁻¹ bei 25°C aufweist.

Der Anteil vom im wesentlichen linearem Organopolysiloxan, in dem zusätzlich zu den SiC-gebundenen organischen Resten SiOC-gebundene, aus Kohlenstoff- und Wasserstoffatomen und/oder aus Kohlenstoff-, Wasserstoff- und mindestens 2 Sauerstoffatomen je Rest sowie gegebenenfalls auch mindestens einem Si-Atom aufgebaute Reste mit jeweils mindestens 6 Kohlenstoffatomen je Rest vorliegen, beträgt 2 bis 95 Gewichtsprozent, bezogen auf das Gesamtgewicht aller in der jeweiligen Zusammensetzung vorhandenen im wesentlichen linearen Organopolysiloxane, von Siliconharz und Füllstoffen.

Wegen ihrer leichteren Zugänglichkeit sind im Siliconharz vorzugsweise mindestens 80% der Reste R Methylgruppen. Beispielsweise können die genannten Siliconharze bei Raumtemperatur feste, aus (CH₃)₃SiO_{1/2} und SiO_{4/2}-Einheiten aufgebaute Harze mit 0,25 bis 1,25 (CH₃)₃SiO_{1/2}-Einheiten je SiO_{4/2}Einheit sein. Diese bevorzugten Siliconharze können, bedingt durch ihre Herstellung, bis zu insgesamt 5 Gewichts-% Si-gebundene Methoxy-, Ethoxy- oder Hydroxylgruppen enthalten. Die genannten Siliconharze sind in der Regel mit Polydimethylsiloxanen nicht vollständig mischbar.

Obwohl nicht bevorzugt, können die Zusammensetzungen 2,2,4-Trimethyl-1,3-diisobutyryloxypentan maximal zu 10 Gew.-%, vorzugsweise maximal zu 5 Gew.%, insbesondere maximal zu 1 Gew.%, besonders vorzugsweise garnicht, enthalten, wobei sich die vorstehenden Prozentzahlen auf die Summe der Gewichte vom im wesentlichen linearem Organopolysiloxanen, Siliconharz und Füllstoff(en) bezieht.

Obwohl nicht bevorzugt, können die Zusammensetzungen Tenside enthalten. Der Anteil der Tenside beträgt vorzugsweise 0 bis 50 Gewichtsprozent, bezogen auf das Gesamtgewicht aller in der jeweiligen Zusammensetzung vorhandenen im wesentlichen linearen Organopolysiloxane, Siliconharz von Füllstoff(en) und Dispergiermittel. In diesem Zusammenhang sei bemerkt, daß sich die jeweils tatsächlich vorliegenden, in den angegebenen Bereichen liegenden Gewichtsprozentsätze von im wesentlichen linearem Organopolysiloxan, Siliconharz, Füllstoff(en) und Dispergiermittel selbstverständlich zu 100 Gewichtsprozent ergänzen müssen.

Beispiele für bevorzugte Tenside sind Anlagerungsprodukte von Ethylenoxyd an lineare oder verzweigte, 8 bis 20 Kohlenstoffatome je Molekül aufweisende Alkanole oder Arylphenole, wie Isotridecylpolyoxyethylenglykolether, Stearylpolyoxyethylenglykolether, Cetylpolyoxyethylenglykolether, Trimethylnonylpolyoxyethylenglykolether und Nonylphenolpolyoxyethylenglykolether, ferner Anlagerungsprodukte von Ethyloxyd an lineare oder verzweigte Monocarbonsäuren sowie Polymere. Vorzugsweise enthalten derartige Anlagerungsprodukte 2 bis 15 Ethylenoxydeinheiten je Molekül. Beispiele für besonders bevorzugte Tenside sind insbesondere Polyoxyethylenglykolsorbitanester oder Polyoxyethylenglykolsorbitolester mit HLB-Werten (vgl. US-A-4076648, ausgegeben 28. Februar 1978, M.R. Rosen, Union Carbide Corporation, Spalte 4, Zeile 51 bis Spalte 6, Zeile 2) von 8 bis 14, wie Polyoxyethylenglykolsorbitanhexaoleat oder Polyoxyethylensorbitolhexaoleat. Beispiele für bevorzugte Tenside sind schließlich ebenso Fettsäuremono-, di- und -polyglyceride und Natrium- oder Calciumstearoyllactat, Diglycerinstearinsäureester sowie Sorbitanmonostearat,Polyvinylalkohole, teilverseifte Polyvinylacetate, Stärke, gegebenenfalls modifizierte Cellulosetypen und Polyacrylate.

Die Zusammensetzungen können eine Art von Tensid enthalten. Die Zusammensetzungen können aber auch Gemische aus mindestens zwei verschiedenen Arten von Tensiden enthalten.

Die Füllstoffe in den Zusammensetzungen können die gleichen Füllstoffe sein, die auch in den bisher bekannten Antischaummitteln vorliegen konnten. Beispiele für solche Füllstoffe sind hydrophile und hydrophobe Oxide von Silicium, Magnesium oder Zink, wobei diese Oxide vorzugsweise jeweils eine Oberfläche von mindestens 50 m²/g aufweisen, Salze von Elementen der II. oder III. Gruppe des Periodensystems nach Mendeleieff mit einer Ordnungszahl von 12 bis 30 mit 12 bis 22 Kohlenstoffatome je Molekül aufweisenden, aliphatischen einbasigen Carbonsäuren oder Hydroxycarbonsäuren, wie Calciumstearat oder Calcium-12-hydroxystearat, sowie Produkte, die mindestens bei der jeweiligen Anwendungstemperatur der Zusammensetzung als Antischaummittel fest und durch Umsetzung von mindestens einem ein- oder mehrwertigem Isocyanat mit mindestens einer organischen Verbindung, die mindestens ein gegenüber der Isocyanatgruppe reaktionsfähiges Wasserstoffatom enthält, hergestellt worden sind, wie das Produkt der Umsetzung von Naphthylendiisocyanat mit Cyclohexylamin. Vorzugsweise ist die Herstellung der letztgenannten Art von Füllstoffen in Gegenwart von mindestens einem der zur Herstellung der Zusammensetzung eingesetzten Organopolysiloxane erfolgt. Weitere Beispiele für Füllstoffe in der Zusammensetzung sind Lithiumstearat, Magnesiumsilikat und Magnesiumaluminiumsilikat. Besonders bevorzugt ist pyrogen erzeugtes oder gefälltes insbesondere hydrophobiertes Siliciumdioxyd mit einer Oberfläche von mindestens 50 m²/g.

Die Zusammensetzungen können eine Art von Füllstoff enthalten. Die Zusammensetzungen können aber auch Gemische aus mindestens zwei verschiedenen Arten von Füllstoffen enthalten.

Der Anteil von Füllstoff beträgt vorzugsweise 1 bis 20, insbesondere 2 bis 8 Gewichtsprozent, bezogen auf das Gesamtgewicht aller in der jeweiligen Zusammensetzung vorliegenden Organopolysiloxane und Füllstoff(e). Zu allen in der jeweiligen Zusammensetzung vorliegenden Organopolysiloxanen sind zu rechnen das erwähnte im wesentlichen lineare Organopolysiloxan mit SiOC gebundenen Resten, das erwähnte, im wesentlichen aus Triorganosiloxy- und SiO_{4/2}-Einheiten aufgebaute Siliconharz (nachstehend MQ-Harz genannt) sowie gegebenenfalls anwesende zusätzliche Organopolysiloxane.

Diese zusätzlichen Organopolysiloxane sind insbesondere Polydiorganosiloxane, die endständige Hydroxy- und/oder Triorganosiloxygruppen tragen und deren Organo-Reste vorzugsweise zu mindestens 80% Methylgruppen sind. Diese Polydiorganosiloxane haben vorzugsweise eine Viskosität von 35 bis 100 000 mm²/S bei 25°C, insbesondere 50 bis 50.000mm²/S bei 25°. Sie dienen beispielsweise dazu, die Viscosität der Zusammensetzung auf ein gewünschtes Maß einzustellen.

Die Viskosität der handelsfertigen Zusammensetzung liegt vorzugsweise bei 1000 bis 500.000, insbesondere 25.000 bis 40.000 mm²/S, gemessen bei 25°.

In den Zusammensetzungen beträgt das Gewichtsverhältnis von im wesentlichen linearen Organopolysiloxanen mit SiOC-gebundenen Resten (nachstehend SiOC-Organopolysiloxane genannt) zu im wesentlichen aus Triorganosiloxy- und SiO_{4/2} - Einheiten aufgebauten Siliconharzen (MQ-Harze) vorzugsweise 1 : 10 bis 10 : 1, insbesondere 1 : 5 bis 5 : 1, speziell 1 : 2 bis 2 : 1 Gewichtsteile.

Sollen die Zusammensetzungen als Bestandteil von Waschmitteln eingesetzt werden, was ihr bevorzugtes Einsatzgebiet ist, so enthalten sie vorzugsweise keine Emulgatoren oder Dispersionsmittel. In Waschmitteln sind ohnehin genügend von diesen Stoffen enthalten. Ein weiterer Zusatz dieser Stoffe würde die Dispergierung der Zusammensetzung in der Waschlauge beschleunigen. Dies würde jedoch zu einer Verarmung der Zusammensetzung an der Grenzfläche Waschlauge/Luft und somit zu einem Wirkungsabfall der Zusammensetzung als Antischaummittel führen.

Zusätzlich zu Organopolysiloxanen und Füllstoff können die Zusammensetzungen weitere Stoffe enthalten, die auch bisher bei der Bearbeitung von Antischaummitteln auf Grundlage von entschäumend wirkendem Organopolysiloxan und Füllstoff verwendet werden konnten. Beispiele für derartige zusätzliche Stoffe sind Mineralöle, Paraffinwachse, pflanzliche Öle, höhere Alkohole, Glykole und Ethylenoxyd-Propylenoxydpolymere. Die Zusammensetzungen können auch an Feststoffen adsorbiert bzw. in Feststoffen absorbiert werden, was ihre Formulierung als Pulver ermöglicht. Beispiele für solche Feststoffe sind Kunststoffe, wie Polyvinylacetate, Polyvinylalkohole, Stärke, Polyacrylate, Zeolithe, anorganische Salze, wie Phosphate, beispielsweise Natriumtripolyphosphat und Trinatriumphosphat und Sulfate, wie Natriumsulfat bzw. Mischung von mindestens zwei der vorstehend genannten Stoffe und dergleichen mehr.

Sie lassen sich auch in dispergierter Form mit Verdickungsmittel, beispielsweise Methylcellulosetypen, Carboxymethylcellulosen, Stärke, oder Polyvinylalkohole und Polymerdispersionen, beispielsweise von Polyvinylacetat, sprühtrocknen. Ein entsprechend sprühgetrocknetes Pulver hat vorzugsweise folgende Zusammensetzung (in Gewichtsprozent):
40% - 70% Polyvinylacetat, stabilisiert mit Schutzkolloiden
5% - 70% Polyvinylalkohole oder andere Verdickungsmittel
3% - 40% der Zusammensetzung in Substanz, gelöster oder emulgierter Form
3% - 25% Antiblockmittel
Beispiele für Antiblockmittel sind feingemahlene Aluminiumsilikate, Kieselgur, Calciumcarbonat, gefällte Kieselsäure u.a.mehr.

Mit den vorgenannten Emulgatoren und Wasser lassen sich die Zusammensetzungen auch zu Emulsionen verarbeiten
Die Zusammensetzungen können zur Verhinderung oder Bekämpfung von Schaum nicht nur, jedoch insbesondere auf oder in wäßrigen Lösungen eingesetzt werden, besonders als Zusätze zu Waschmitteln oder einem oder mehr Bestandteilen der Waschmittel, wie Natriumtripolyphosphat oder Natriumperborat oder einem Gemisch aus solchen Natriumverbindungen, weiterhin z.B. bei der Eindampfung von alkalischen Ablaugen der Papierindustrie, der Konzentrierung von Kautschuk-Latices, bei Schneidölemulsionen in der metallverarbeitenden Industrie, in Dispersionsfarben und anderen Anwendungen von Kunstharzdispersionen, in Wasserlacken, in Schmiermitteln, bei der Erdölforderung, Textilfärbung, einschließlich des HT-Verfahrens (englisch: high-temperature dying process) und der Jet-Färbung, Abwasseraufbereitung, Gärprozessen, wie Antibiotika-Herstellung und Erzflotation.

In den folgenden Beispielen wird die Wirksamkeit der Antischaummittel jeweils durch eine Zahl wiedergegeben. Diese Zahl wird als "SRF"-Wert (SRF = Abkürzung für " Schaumrresistenzflache") bezeichnet und wie folgt bestimmt:
In einem 800 ml-Becherglas mit einem Durchmesser von 9,5 cm und einer Höhe von 13 cm wird zu 200 ml einer 4 gewichtsprozentigen wäßrigen Lösung von Natrium-C₁₄₋₁₅-Alkylsulfonat die im folgenden Zusammenhang mit dem jeweiligen SRF-Wert angegebene Menge des zu untersuchenden Antischaummittels gegeben. Die so erhaltene Mischung wird durch 2 gegenläufige Rührer mit mehreren, jeweils in sich geschlossenen Armen bei 1000 Umdrehungen je Minute 1 Minute so verschäumt, daß keine homogene Flüssigkeit verbleibt. 4 Lichtschranken sind mit einem Abstand von jeweils 1,5 cm voneinander senkrecht entlang der Außenwand des Becherglases angebracht. Eine derartige Vorrichtung ist in DE-A-25 51 260 (offengelegt 18. Mai 1977, Wacker-Chemie GmbH) wiedergegeben. Wenn der Schaum in sich zusammenfällt, werden die Lichtschranken eine nach der anderen freigegeben und es wird automatisch mit einem Schreiber ein Diagramm aufgezeichnet, das auf der Abszisse die Zeiten (1 cm = 10 Sekunden) wiedergibt, die bis zum Verschwinden von Schaum bei der obersten, zweithöchsten, dritthöchsten und niedrigsten Lichtschranke verstreichen. 8 cm auf der Ordinate entsprechen der obersten Lichtschranke. Es wird eine Linie erhalten, die fast senkrecht vom Kreuzungspunkt von Abszisse und Ordinate 8 cm hochgeht, dann waagrecht bis zum Zeitpunkt der Freigabe der zweithöchsten Lichtschranke waagrecht verläuft, bei diesem Zeitpunkt senkrecht abfällt u.s.w. In DE-A-25 51 260 ist auch ein derartiges Diagramm wiedergegeben. Die Fläche, welche die so erhaltene Treppenlinie mit Abszisse und Ordinate bildet, wird vermessen und ergibt den SRF-Wert. Je kleiner dieser Wert ist, um so größer ist die Wirksamkeit des Antischaummittels.

In den folgenden Beispielen beziehen sich alle Angaben von Teilen und Prozentsätzen auf das Gewicht, soweit nichts anderes angegeben ist.

### Beispiele

### A: Herstellung des SiOC-Organopolysiloxans

650 g eines alpha-omega-bis-Hydroxypolydimethylsiloxans einer Viscosität von 80 mm².s⁻¹ bei 25°C,
220 g 2-Octyldodecanol und
4,5 g 20 Gew. %ige methanolische KOH-Lösung wurden vermischt und auf 140°C erwärmt, wobei das durch die Kondensation entstandene Wasser kontinuierlich abdestilliert wurde. Nach dem Abkühlen wurde mit Dimethyldichlorsilan neutralisiert,
18 g Natriumhydrogencarbonat zugegeben und über Natriumsulfat getrocknet und schließlich filtriert. Das so erhaltene Öl hatte eine Viscosität von ca. 180mm² .s⁻¹ bei 25°C. Aus NMR-Messungen ergab sich ein Gehalt des Öls an 2-Octyldodecylgruppen von 23,5 Gew.%.

### B: Entschäumergrundlage

Ein Gewichtsteil des gemäß A hergestellten Öls wurde mit 2 Gewichtsteilen einer 50 Gew.-%igen Lösung von MQ-Harz in Toluol vermischt, wobei das MQ-Harz zu 40 Mol.% aus Trimethylsiloxy- und zu 60 Mol.% aus SiO_{4/2}-Einheiten bestand. Von diesem Gemisch wurden bei 120°C und einem Druck von 100 kPa bis zu 1,6 kPa (abs.) flüchtige Bestandteile abdestilliert. Erhalten wurde ein Öl mit einer Viscosität von 3200 mm².s⁻¹ bei 25°C. Nach ²⁹Si-NMR-Messungen enthielt das Öl 23,9 Mol% Trimethylsiloxy- und 37 Mol% SiO_{4/2}-Einheiten.

### Beispiel 1:

Eine Mischung aus
89,3 Gewichtsteilen eines alpha-omega-bis-Trimethylsilylpolydimethylsiloxans einer Viscosität von 5.000 mm².s⁻¹
5 Gewichtsteilen der gemäß B hergestellten Entschäumergrundlage
5 Gewichtsteilen einer pyrogen hergestellten hochdispersen Kieselsäure einer BET-Oberfläche von ca. 300 m²/g
und
0,7 Gewichtsteilen einer 20 Gew.-%igen methanolischen KOH-Lösung
wurde 2 Stunden lang bei 150°C gehalten und nach dem Abkühlen homogenisiert. Man erhielt ein Antischaummittel einer Viscosität von ca. 25 600 mm².s⁻¹ bei 25°C.

### Beispiel 2:

Eine Mischung aus
94 Gewichtsteilen der gemäß B hergestellten Entschäumergrundlage,
3 Gewichtsteilen einer gefällten Kieselsäure mit einer BET-Oberfläche von ca. 100 m²/g und
3 Gewichtsteilen einer pyrogen hergestellten Kieselsäure mit einer BET-Oberfläche von ca. 150 m²/g
wurde 2 Stunden lang bei 150°C gehalten und nach dem Abkühlen homogenisiert.

Man erhielt ein Antischaummittel einer Viscosität von 10 350 mm².s⁻¹ bei 25°C.

### Beispiel 3:

Beispiel 1 wurde wiederholt mit der Abänderung, daß anstatt einem alpha-omega-bis-Trimethylsilylpolydimethylsiloxan 89,3 Gewichtsteile eines alpha-omega-bis-Hydroxypolydimethylsiloxans mit einer Viscosität von ca. 6.000 mm²/s bei 25°C eingesetzt wurde. Die so erhaltene Masse einer Viscosität von ca. 400.000 mm².s⁻¹ wurde mit einem Methylsiliconöl einer Viscosität von ca. 50 mm²/s bei 50°C (käuflich bei der Wacker-Chemie GmbH als Siliconöl AK 50) auf eine Viscosität von ca. 30.000 mm²/s bei 25°C eingestellt.

### Beispiel 4:

Eine Mischung aus
90 Gewichtsteilen eines alpha-omega-bis-Trimethylsilylpolydimethylsiloxans einer Viscosität von ca. 350 mm²/s bei 25°C,
5 Gewichtsteilen einer pyrogen hergestellten Kieselsäure einer BET-Oberfläche von ca. 300 m²/g und
5 Gewichtsteilen der gemäß B hergestellten Entschäumergrundlage
wurde 2 Stunden lang bei 150°C gehalten und nach dem Abkühlen homogenisiert. Man erhielt ein Antischaummittel einer Viscosität von 11 300 mm²/s bei 25°C.

### Vergleichsbeispiele 1 bis 4:

Eine Mischung aus
95 Gewichtsteilen eines alpha-omega-bis-Trimethylsilylpolydimethylsiloxans einer Viscosität von
350 mm²/s (Vergleichsbeispiel 1) bzw.,
5.000 mm²/s (Vergleichsbeispiele 2 und 4) bzw.
10.000 mm²/s (Vergleichsbeispiel 3)
und
5 Gewichtsteilen einer pyrogen hergestellten Kieselsäure einer BET-Oberfläche von 200 m²/g sowie, ausschließlich in Vergleichsbeispiel 4,
0,1 Gewichtsteile einer 20 Gew.-%igen methanolischen KOH-Lösung
wurde 3 Stunden lang bei 180°C belassen und nach dem Abkühlen homogenisiert.

### Wirkungsbeispiele:

Für die vorstehend aufgeführten Beispiele und Vergleichsbeispiele wurden nach dem oben geschilderten Verfahren jeweils SRF-Werte bestimmt, wobei jeweils 0,1 g des Antischaummittels als 10 Gew.% Lösung in Ethylacetate verwendet wurde. Diese SRF-Werte sind in der folgenden Tabelle aufgeführt. Hierin bedeuten SRF 1 den SRF-Wert bestimmt wie oben angegeben, SRF 2 denbei der ersten, SRF 3 den bei der zweiten Wiederholung des Tests ohne weitere Zugabe von Antischaummittel bestimmten Wert.

**Tabelle**

| Beispiel | SRF1 | SRF2 | SRF3 |
|---|---|---|---|
| 1 | 250 | 220 | 300 |
| 2 | 450 | 560 | 820 |
| 3 | 180 | 200 | 240 |
| 4 | 485 | 510 | 590 |

| Vergleichsbeispiel | | | |
|---|---|---|---|
| 1 | 950 | 1 610 | 2 580 |
| 2 | 800 | 1 450 | 2 160 |
| 3 | 750 | 1 300 | 2 050 |
| 4 | 700 | 1 250 | 1 920 |

Wie bereits erwähnt, ist die entschäumende Wirkung umso stärker, je kleiner der SRF-Wert des jeweiligen Mittels ist.

### Beispiel 5:

4000g einer 55%igen schutzkolloidstabilisierten Polyvinylacetatdispersion
2200g einer 20%igen Lösung von Polyvinylalkohol einer Verseifungszahl von 140 und einer Viskosität von 5 mPa.s bei 20 °C, gemessen an einer 4%igen wäßrigen Lösung
656g eines gemäß Beispiel 1 hergestellten Antischaummittels
wurden in einem Schnellrührwerk (Dissolver) in
3000g Wasser dispergiert.

Die so hergestellte Dispersion wurde in einem Sprühtrockner mit einer Austrittstemperatur von 80°C verdüst und das so erhaltene Pulver (3300g) mit 330g Antiblockmittel (einem Aluminiumsilikat) vermengt.

Die SRF.Werte einer Suspension von 0,075g des auf diese Weise hergestellten Antischaummittels in 200 ml einer 4Gew.%-igen wäßrigen Lösung von Alkylsulfonate betrugen:
SRF1: 1410; SRF2: 1480; SRF3: 1540.

### Vergleichsbeispiel 5:

Beispiel 5 wurde wiederholt mit der Abänderung, daß anstelle des gemäß Beispiel 1 hergestellten Antischaummittels die gleiche Menge des gemäß Vergleichsbeispiel 2 hergestellten Antischaummittels eingesetzt wurde.
Die entsprechend Beipiel 5 ermittelten SRF-Werte betrugen:
SRF1: 2020; SRF2: 2510; SRF3: 2950.

### Beschriebung für folgende Vertragsstaaten : AT, CH, LI, NL

Die Erfindung betrifft die Verwendung von unerwünscht starke Schaumbildung verhütenden Mitteln und Zusätzen, welche insbesondere für den Einsatz in Waschmitteln geeignet sind. Diese Antischaummittel sind herstellbar auf der Grundlage von im wesentlichen linearem Organopolysiloxan, im wesentlichen aus Triorganosiloxy- und SiO_{4/2} - Einheiten bestehendem Siliconharz sowie Füllstoff(en).

In US-A-3 455 839 (ausgegeben am 15. Juli 1969, L.A. Rauner, Dow Corning Corp.) sind schaumreduzierende Mischungen aus einem Polydimethylsiloxanfluid, einem aus Trimethylsiloxy- und SiO_{4/2} - Einheiten bestehendem Harz sowie SiO₂ - Aerogel beschrieben. Aus EP-A-106 209 (publiziert am 25. April 1984, E. Innertsberger et al., Wacker-Chemie GmbH) sind Antischaummittel auf der Grundlage von Organopolysiloxan mit SiOC-gebunden organischen Resten, Füllstoff, Dispergiermittel und Siliconharz bekannt, welche bevorzugt wesentliche Mengen an 2,2,4 - Trimethyl-1,3-diisobutyryloxypentan enthalten.

In EP-A 254 499 (publiziert am 27. Januar 1988, T. Miura, Dow Corning K.K.) und EP-A 270 273 (publiziert am 08. Juni 1988, K. Aizawa, Dow Corning K.K.) (jeweils Stand der Technik nach Artikel 54(3) EPÜ für die Vertragsstaaten BE, DE, FR, GB und IT) sind Verfahren zur Herstellung von Antischaummitteln bekannt, bei denen Gemische von linearen Polyorganosiloxanen, Polyorganosiloxanen mit SiOC-gebundenen Resten, Siliconharzen und/oder Teilhydrolysaten von Alkylchlorsilanen mit Katalysator in Gegenwart von Füllstoff umgesetzt werden.

Aufgabe der vorliegenden Erfindung war es Zusammensetzungen für die Verwendung als Antischaummittel zur Verfügung zu stellen. Insbesonders war es Aufgabe der vorliegenden Erfindung, Zusammensetzungen für die Verwendung als Antischaummittel für Waschmittel zur Verfügung zu stellen, deren Wirkung im Laufe des Waschvorgangs nur wenig nachläßt. Des weiteren war es Aufgabe der vorliegenden Erfindung, Zusammensetzungen für die Verwendung als Antischaummittel zur Verfügung zu stellen, die in einer Waschmittel-Slurry so stabil sind, daß diese Antischaummittel dem Waschmittel bereits vor dem Sprühtrocknen der Slurry zugegeben werden können.

Diese Aufgaben werden durch den gegenstand von Anspruch 1 gelöst.

Beispiele für Kohlenwasserstoffreste R sind Alkylreste, wie der Methyl-, Ethyl-, n-Propyl-, Isopropyl, n-Butyl- und sec.-Butylrest sowie Octadecylreste; Alkenylreste, wie der Vinylrest; Cycloalkylreste, wie der Cyclohexylrest und Methylcyclohexylreste; Arylreste, wie der Phenylrest; Aralkylreste, wie der 2-Phenylpropylrest und Alkarylreste, wie Tolylreste.

Beispiele für substituierte Kohlenwasserstoffreste R sind insbesondere halogenierte Kohlenwasserstoffreste, wie der 3,3,3-Trifluorpropylrest und o-, p- und m-Chlorphenylreste.

Insbesondere wegen der leichteren Zugänglichkeit sind vorzugsweise mindestens 80% der Anzahl der SiC-gebundenen Reste in den Organopolysiloxanen der als Antischaummittel verwendeten Zusammensetzung Methylreste.

Vorzugsweise sind die aus Kohlenstoff-, Wasserstoff- und mindestens 2 Sauerstoffatomen je Rest sowie gegebenenfalls auch mindestens einem Si-Atom aufgebauten SiOC-gebundenen Reste R' mit jeweils mindestens 6 Kohlenstoffatomen je Rest einwertig. Sie können aber auch zweiwertig sein.

Vorzugsweise enthalten die SiOC-gebundenen, aus Kohlenstoff- und Wasserstoffatomen aufgebauten Reste mit mindestens 6 Kohlenstoffatomen je Rest höchstens 30 Kohlenstoffatome je Rest. Weiterhin ist bevorzugt, daß diese Reste Alkylreste sind, wie der n-Hexyl-, 2-Ethylhexyl-, Lauryl-, Isotridecyl- und 2-Octyldodecylrest, oder Cycloalkylreste sind, wie Methylcyclohexylreste. Diese Reste können aber auch z.B. aus Kohlenstoff- und Wasserstoffatomen aufgebaute Reste mit aliphatischer Mehrfachbindung, wie der Oleylrest; Arylreste, wie der Phenylrest; Aralkylreste, wie der Benzylrest; oder Alkarylreste, wie Tolylreste, sein.

Vorzugsweise sind in den SiOC-gebundenen, aus Kohlenstoff-, Wasserstoff- und mindestens 2 Sauerstoffatomen je Rest sowie gegebenenfalls auch mindestens einem Si-Atom aufgebauten Resten mit mindestens 6 Kohlenstoffatomen je Rest mindestens 2 der Sauerstoffatome Ethersauerstoffatome. Weiterhin ist bevorzugt, daß diese Reste ein Molekulargewicht von 100 bis 20 000 besitzen.

Beispiele für SiOC-gebundene, aus Kohlenstoff-, Wasserstoff- und mindestens 2 Sauerstoffatomen je Rest sowie gegebenenfalls auch mindestens einem Si-Atom aufgebaute Reste mit mindestens 6 Kohlenstoffatomen je Rest sind Polyethylenglykole, Propylenoxydeinheiten, wobei diese verschiedene Einheiten in Blöcken vorliegen oder statistisch verteilt sein können. Wenn diese Reste nicht zweiwertig sind, was ohnehin nicht bevorzugt ist, ist das Sauerstoffatom, das sich am anderen Ende als das mit einem Si-Atom verknüpfte Sauerstoffatom befindet, vorzugsweise an einen Alkylrest, wie den Methyl- oder n- oder tert.-Butylrest, gebunden. Es kann aber auch z.B. an einen Acylrest, wie den Acetylrest oder z.B. an einen Trimethylsilylrest gebunden sein.

Die Herstellung der im wesentlichen linearen Organopolysiloxane, in denen zusätzlich zu den SiC-gebundenen organischen Resten gleiche oder verschiedene, SiOC-gebundene, aus Kohlenstoff- und Wasserstoffatomen und/oder aus Kohlenstoff-, Wasserstoff- und mindestens 2 Sauerstoffatomen je Rest sowie gegebenenfalls auch mindestens einem Si-Atom aufgebaute Reste R' mit jeweils mindestens 6 Kohlenstoffatomen je Rest vorliegen, kann in bekannter bzw. an sich bekannter Weise beispielsweise durch Kondensation von Si-gebundene Hydroxylgruppen aufweisenden Organopolysiloxanen mit Alkoholen der allgemeinen Formel

R'OH,

wobei R' die oben angegebene Bedeutung hat, in Gegenwart von sauren oder alkalischen Katalysatoren, wie säurebehandeltem Bentonit oder methanolischem Kaliumhydroxyd, erfolgen.

Es kann eine Art von im wesentlichen linearem Organopolysiloxan, in dem SiOC-gebundene organische Reste der oben definierten Art vorliegen, zur Herstellung der Zusammensetzung verwendet werden. Es können aber auch mindestens zwei verschiedene Arten von Organopolysiloxanen mit solchen SiOC-gebundenen Resten verwendet werden. Es ist bevorzugt, daß derartiges Organopolysiloxan eine durchschnittliche Viskosität von 50 bis 500 000 mm².s⁻¹ bei 25°C aufweist.

Der Anteil vom im wesentlichen linearem Organopolysiloxan, in dem zusätzlich zu den SiC-gebundenen organischen Resten SiOC-gebundene, aus Kohlenstoff- und Wasserstoffatomen und/oder aus Kohlenstoff-, Wasserstoff- und mindestens 2 Sauerstoffatomen je Rest sowie gegebenenfalls auch mindestens einem Si-Atom aufgebaute Reste mit jeweils mindestens 6 Kohlenstoffatomen je Rest vorliegen, beträgt 2 bis 95 Gewichtsprozent, bezogen auf das Gesamtgewicht aller in der jeweiligen Zusammensetzung vorhandenen im wesentlichen linearen Organopolysiloxane, von Siliconharz und Füllstoffen.

Wegen ihrer leichteren Zugänglichkeit sind im Siliconharz vorzugsweise mindestens 80% der Reste R Methylgruppen. Beispielsweise können die genannten Siliconharze bei Raumtemperatur feste, aus (CH₃)₃SiO_{1/2} und SiO_{4/2}-Einheiten aufgebaute Harze mit 0,25 bis 1,25 (CH₃)₃SiO_{1/2}-Einheiten je SiO_{4/2}Einheit sein. Diese bevorzugten Siliconharze können, bedingt durch ihre Herstellung, bis zu insgesamt 5 Gewichts-% Si-gebundene Methoxy-, Ethoxy- oder Hydroxylgruppen enthalten. Die genannten Siliconharze sind in der Regel mit Polydimethylsiloxanen nicht vollständig mischbar.

Obwohl nicht bevorzugt, können die Zusammensetzungen 2,2,4-Trimethyl-1,3-diisobutyryloxypentan maximal zu 10 Gew.-%, vorzugsweise maximal zu 5 Gew.%, insbesondere maximal zu 1 Gew.%, besonders vorzugsweise garnicht, enthalten, wobei sich die vorstehenden Prozentzahlen auf die Summe der Gewichte vom im wesentlichen linearem Organopolysiloxanen, Siliconharz und Füllstoff(en) bezieht.

Obwohl nicht bevorzugt, können die Zusammensetzungen Tenside enthalten. Der Anteil der Tenside beträgt vorzugsweise 0 bis 50 Gewichtsprozent, bezogen auf das Gesamtgewicht aller in der jeweiligen Zusammensetzung vorhandenen im wesentlichen linearen Organopolysiloxane, Siliconharz von Füllstoff(en) und Dispergiermittel. In diesem Zusammenhang sei bemerkt, daß sich die jeweils tatsächlich vorliegenden, in den angegebenen Bereichen liegenden Gewichtsprozentsätze von im wesentlichen linearem Organopolysiloxan, Siliconharz, Füllstoff(en) und Dispergiermittel selbstverständlich zu 100 Gewichtsprozent ergänzen müssen.

Beispiele für bevorzugte Tenside sind Anlagerungsprodukte von Ethylenoxyd an lineare oder verzweigte, 8 bis 20 Kohlenstoffatome je Molekül aufweisende Alkanole oder Arylphenole, wie Isotridecylpolyoxyethylenglykolether, Stearylpolyoxyethylenglykolether, Cetylpolyoxyethylenglykolether, Trimethylnonylpolyoxyethylenglykolether und Nonylphenolpolyoxyethylenglykolether, ferner Anlagerungsprodukte von Ethyloxyd an lineare oder verzweigte Monocarbonsäuren sowie Polymere. Vorzugsweise enthalten derartige Anlagerungsprodukte 2 bis 15 Ethylenoxydeinheiten je Molekül. Beispiele für besonders bevorzugte Tenside sind insbesondere Polyoxyethylenglykolsorbitanester oder Polyoxyethylenglykolsorbitolester mit HLB-Werten (vgl. US-A-4076648, ausgegeben 28. Februar 1978, M.R. Rosen, Union Carbide Corporation, Spalte 4, Zeile 51 bis Spalte 6, Zeile 2) von 8 bis 14, wie Polyoxyethylenglykolsorbitanhexaoleat oder Polyoxyethylensorbitolhexaoleat. Beispiele für bevorzugte Tenside sind schließlich ebenso Fettsäuremono-, di- und -polyglyceride und Natrium- oder Calciumstearoyllactat, Diglycerinstearinsäureester sowie Sorbitanmonostearat,Polyvinylalkohole, teilverseifte Polyvinylacetate, Stärke, gegebenenfalls modifizierte Cellulosetypen und Polyacrylate.

Die Zusammensetzungen können eine Art von Tensid enthalten. Die Zusammensetzungen können aber auch Gemische aus mindestens zwei verschiedenen Arten von Tensiden enthalten.

Die Füllstoffe in den Zusammensetzungen können die gleichen Füllstoffe sein, die auch in den bisher bekannten Antischaummitteln vorliegen konnten. Beispiele für solche Füllstoffe sind hydrophile und hydrophobe Oxide von Silicium, Magnesium oder Zink, wobei diese Oxide vorzugsweise jeweils eine Oberfläche von mindestens 50 m²/g aufweisen, Salze von Elementen der II. oder III. Gruppe des Periodensystems nach Mendeleieff mit einer Ordnungszahl von 12 bis 30 mit 12 bis 22 Kohlenstoffatome je Molekül aufweisenden, aliphatischen einbasigen Carbonsäuren oder Hydroxycarbonsäuren, wie Calciumstearat oder Calcium-12-hydroxystearat, sowie Produkte, die mindestens bei der jeweiligen Anwendungstemperatur der Zusammensetzung als Antischaummittel fest und durch Umsetzung von mindestens einem ein- oder mehrwertigem Isocyanat mit mindestens einer organischen Verbindung, die mindestens ein gegenüber der Isocyanatgruppe reaktionsfähiges Wasserstoffatom enthält, hergestellt worden sind, wie das Produkt der Umsetzung von Naphthylendiisocyanat mit Cyclohexylamin. Vorzugsweise ist die Herstellung der letztgenannten Art von Füllstoffen in Gegenwart von mindestens einem der zur Herstellung der Zusammensetzung eingesetzten Organopolysiloxane erfolgt. Weitere Beispiele für Füllstoffe in der Zusammensetzung sind Lithiumstearat, Magnesiumsilikat und Magnesiumaluminiumsilikat. Besonders bevorzugt ist pyrogen erzeugtes oder gefälltes insbesondere hydrophobiertes Siliciumdioxyd mit einer Oberfläche von mindestens 50 m²/g.

Die Zusammensetzungen können eine Art von Füllstoff enthalten. Die Zusammensetzungen können aber auch Gemische aus mindestens zwei verschiedenen Arten von Füllstoffen enthalten.

Der Anteil von Füllstoff beträgt vorzugsweise 1 bis 20, insbesondere 2 bis 8 Gewichtsprozent, bezogen auf das Gesamtgewicht aller in der jeweiligen Zusammensetzung vorliegenden Organopolysiloxane und Füllstoff(e). Zu allen in der jeweiligen Zusammensetzung vorliegenden Organopolysiloxanen sind zu rechnen das erwähnte im wesentlichen lineare Organopolysiloxan mit SiOC gebundenen Resten, das erwähnte, im wesentlichen aus Triorganosiloxy- und SiO_{4/2}-Einheiten aufgebaute Siliconharz (nachstehend MQ-Harz genannt) sowie gegebenenfalls anwesende zusätzliche Organopolysiloxane.

Diese zusätzlichen Organopolysiloxane sind insbesondere Polydiorganosiloxane, die endständige Hydroxy- und/oder Triorganosiloxygruppen tragen und deren Organo-Reste vorzugsweise zu mindestens 80% Methylgruppen sind. Diese Polydiorganosiloxane haben vorzugsweise eine Viskosität von 35 bis 100 000 mm²/S bei 25°C, insbesondere 50 bis 50.000mm²/S bei 25°. Sie dienen beispielsweise dazu, die Viscosität der Zusammensetzung auf ein gewünschtes Maß einzustellen.

Die Viskosität der handelsfertigen Zusammensetzung liegt vorzugsweise bei 1000 bis 500.000, insbesondere 25.000 bis 40.000 mm²/S, gemessen bei 25°. Die Zusammensetzungen können über die genannten Stoffe hinaus noch Kondensationskatalysatoren enthalten, insbesondere LiOH, NaOH, KOH, RbOH oder CsOH, wobei KOH bevorzugt ist. Kondensationskatalysator(en) sind in der Zusammensetzung vorzugsweise in Mengen von 0 bis 1% bezogen auf das Gewicht aller seiner Komponenten eingesetzt.

In den Zusammensetzungen beträgt das Gewichtsverhältnis von im wesentlichen linearen Organopolysiloxanen mit SiOC-gebundenen Resten (nachstehend SiOC-Organopolysiloxane genannt) zu im wesentlichen aus Triorganosiloxy- und SiO_{4/2} - Einheiten aufgebauten Siliconharzen (MQ-Harze) vorzugsweise 1 : 10 bis 10 : 1, insbesondere 1 : 5 bis 5 : 1, speziell 1 : 2 bis 2 : 1 Gewichtsteile.

Die Zusammensetzungen können durch Vermischen ihrer Komponenten in beliebiger Reihenfolge hergestellt werden. Vorzugsweise wird MQ-Harz und in einem relativ niedrigsiedendem Lösungsmittel gelöst, diese Lösung mit SiOC-Organopolysiloxan vereinigt und die so entstandene Mischung destillativ vom Lösungsmittel befreit; anschließend fügt man gegebenenfalls zusätzlich verwendete Organopolysiloxane und schließlich Füllstoffe und gegebenenfalls zusätzlich verwendete Stoffe zu.

Sollen die Zusammensetzungen als Bestandteil von Waschmitteln eingesetzt werden, was ihr bevorzugtes Einsatzgebiet ist, so enthalten sie vorzugsweise keine Emulgatoren oder Dispersionsmittel. In Waschmitteln sind ohnehin genügend von diesen Stoffen enthalten. Ein weiterer Zusatz dieser Stoffe würde die Dispergierung der Zusammensetzung in der Waschlauge beschleunigen. Dies würde jedoch zu einer Verarmung der Zusammensetzung an der Grenzfläche Waschlauge/Luft und somit zu einem Wirkungsabfall der Zusammensetzung als Antischaummittel führen.

Zusätzlich zu Organopolysiloxanen und Füllstoff können die Zusammensetzungen weitere Stoffe enthalten, die auch bisher bei der Bearbeitung von Antischaummitteln auf Grundlage von entschäumend wirkendem Organopolysiloxan und Füllstoff verwendet werden konnten. Beispiele für derartige zusätzliche Stoffe sind Mineralöle, Paraffinwachse, pflanzliche Öle, höhere Alkohole, Glykole und Ethylenoxyd-Propylenoxydpolymere. Die Zusammensetzungen können auch an Feststoffen adsorbiert bzw. in Feststoffen absorbiert werden, was ihre Formulierung als Pulver ermöglicht. Beispiele für solche Feststoffe sind Kunststoffe, wie Polyvinylacetate, Polyvinylalkohole, Stärke, Polyacrylate, Zeolithe, anorganische Salze, wie Phosphate, beispielsweise Natriumtripolyphosphat und Trinatriumphosphat und Sulfate, wie Natriumsulfat bzw. Mischung von mindestens zwei der vorstehend genannten Stoffe und dergleichen mehr.

Sie lassen sich auch in dispergierter Form mit Verdickungsmittel, beispielsweise Methylcellulosetypen, Carboxymethylcellulosen, Stärke, oder Polyvinylalkohole und Polymerdispersionen, beispielsweise von Polyvinylacetat, sprühtrocknen. Ein entsprechend sprühgetrocknetes Pulver hat vorzugsweise folgende Zusammensetzung (in Gewichtsprozent):
40% - 70% Polyvinylacetat, stabilisiert mit Schutzkolloiden
5% - 70% Polyvinylalkohole oder andere Verdickungsmittel
3% - 40% der Zusammensetzung in Substanz, gelöster oder emulgierter Form
3% - 25% Antiblockmittel
Beispiele für Antiblockmittel sind feingemahlene Aluminiumsilikate, Kieselgur, Calciumcarbonat, gefällte Kieselsäure u.a.mehr.

Mit den vorgenannten Emulgatoren und Wasser lassen sich die Zusammensetzungen auch zu Emulsionen verarbeiten
Die Zusammensetzungen können zur Verhinderung oder Bekämpfung von Schaum nicht nur, jedoch insbesondere auf oder in wäßrigen Lösungen eingesetzt werden, besonders als Zusätze zu Waschmitteln oder einem oder mehr Bestandteilen der Waschmittel, wie Natriumtripolyphosphat oder Natriumperborat oder einem Gemisch aus solchen Natriumverbindungen, weiterhin z.B. bei der Eindampfung von alkalischen Ablaugen der Papierindustrie, der Konzentrierung von Kautschuk-Latices, bei Schneidölemulsionen in der metallverarbeitenden Industrie, in Dispersionsfarben und anderen Anwendungen von Kunstharzdispersionen, in Wasserlacken, in Schmiermitteln, bei der Erdölforderung, Textilfärbung, einschließlich des HT-Verfahrens (englisch: high-temperature dying process) und der Jet-Färbung, Abwasseraufbereitung, Gärprozessen, wie Antibiotika-Herstellung und Erzflotation.

In den folgenden Beispielen wird die Wirksamkeit der Antischaummittel jeweils durch eine Zahl wiedergegeben. Diese Zahl wird als "SRF"-Wert (SRF = Abkürzung für " Schaumrresistenzflache") bezeichnet und wie folgt bestimmt:
In einem 800 ml-Becherglas mit einem Durchmesser von 9,5 cm und einer Höhe von 13 cm wird zu 200 ml einer 4 gewichtsprozentigen wäßrigen Lösung von Natrium-C₁₄₋₁₅-Alkylsulfonat die im folgenden Zusammenhang mit dem jeweiligen SRF-Wert angegebene Menge des zu untersuchenden Antischaummittels gegeben. Die so erhaltene Mischung wird durch 2 gegenläufige Rührer mit mehreren, jeweils in sich geschlossenen Armen bei 1000 Umdrehungen je Minute 1 Minute so verschäumt, daß keine homogene Flüssigkeit verbleibt. 4 Lichtschranken sind mit einem Abstand von jeweils 1,5 cm voneinander senkrecht entlang der Außenwand des Becherglases angebracht. Eine derartige Vorrichtung ist in DE-A-25 51 260 (offengelegt 18. Mai 1977, Wacker-Chemie GmbH) wiedergegeben. Wenn der Schaum in sich zusammenfällt, werden die Lichtschranken eine nach der anderen freigegeben und es wird automatisch mit einem Schreiber ein Diagramm aufgezeichnet, das auf der Abszisse die Zeiten (1 cm = 10 Sekunden) wiedergibt, die bis zum Verschwinden von Schaum bei der obersten, zweithöchsten, dritthöchsten und niedrigsten Lichtschranke verstreichen. 8 cm auf der Ordinate entsprechen der obersten Lichtschranke. Es wird eine Linie erhalten, die fast senkrecht vom Kreuzungspunkt von Abszisse und Ordinate 8 cm hochgeht, dann waagrecht bis zum Zeitpunkt der Freigabe der zweithöchsten Lichtschranke waagrecht verläuft, bei diesem Zeitpunkt senkrecht abfällt u.s.w. In DE-A-25 51 260 ist auch ein derartiges Diagramm wiedergegeben. Die Fläche, welche die so erhaltene Treppenlinie mit Abszisse und Ordinate bildet, wird vermessen und ergibt den SRF-Wert. Je kleiner dieser Wert ist, um so größer ist die Wirksamkeit des Antischaummittels.

In den folgenden Beispielen beziehen sich alle Angaben von Teilen und Prozentsätzen auf das Gewicht, soweit nichts anderes angegeben ist.

### Beispiele

### A: Herstellung des SiOC-Organopolysiloxans

650 g eines alpha-omega-bis-Hydroxypolydimethylsiloxans einer Viscosität von 80 mm².s⁻¹ bei 25°C,
220 g 2-Octyldodecanol und
4,5 g 20 Gew. %ige methanolische KOH-Lösung wurden vermischt und auf 140°C erwärmt, wobei das durch die Kondensation entstandene Wasser kontinuierlich abdestilliert wurde. Nach dem Abkühlen wurde mit Dimethyldichlorsilan neutralisiert,
18 g Natriumhydrogencarbonat zugegeben und über Natriumsulfat getrocknet und schließlich filtriert. Das so erhaltene Öl hatte eine Viscosität von ca. 180mm² .s⁻¹ bei 25°C. Aus NMR-Messungen ergab sich ein Gehalt des Öls an 2-Octyldodecylgruppen von 23,5 Gew.%.

### B: Entschäumergrundlage

Ein Gewichtsteil des gemäß A hergestellten Öls wurde mit 2 Gewichtsteilen einer 50 Gew.-%igen Lösung von MQ-Harz in Toluol vermischt, wobei das MQ-Harz zu 40 Mol.% aus Trimethylsiloxy- und zu 60 Mol.% aus SiO_{4/2}-Einheiten bestand. Von diesem Gemisch wurden bei 120°C und einem Druck von 100 kPa bis zu 1,6 kPa (abs.) flüchtige Bestandteile abdestilliert. Erhalten wurde ein Öl mit einer Viscosität von 3200 mm².s⁻¹ bei 25°C. Nach ²⁹Si-NMR-Messungen enthielt das Öl 23,9 Mol% Trimethylsiloxy- und 37 Mol% SiO_{4/2}-Einheiten.

### Beispiel 1:

Eine Mischung aus
89,3 Gewichtsteilen eines alpha-omega-bis-Trimethylsilylpolydimethylsiloxans einer Viscosität von 5.000 mm².s⁻¹
5 Gewichtsteilen der gemäß B hergestellten Entschäumergrundlage
5 Gewichtsteilen einer pyrogen hergestellten hochdispersen Kieselsäure einer BET-Oberfläche von ca. 300 m²/g
und
0,7 Gewichtsteilen einer 20 Gew.-%igen methanolischen KOH-Lösung
wurde 2 Stunden lang bei 150°C gehalten und nach dem Abkühlen homogenisiert. Man erhielt ein Antischaummittel einer Viscosität von ca. 25 600 mm².s⁻¹ bei 25°C.

### Beispiel 2:

Eine Mischung aus
94 Gewichtsteilen der gemäß B hergestellten Entschäumergrundlage,
3 Gewichtsteilen einer gefällten Kieselsäure mit einer BET-Oberfläche von ca. 100 m²/g und
3 Gewichtsteilen einer pyrogen hergestellten Kieselsäure mit einer BET-Oberfläche von ca. 150 m²/g
wurde 2 Stunden lang bei 150°C gehalten und nach dem Abkühlen homogenisiert.

Man erhielt ein Antischaummittel einer Viscosität von 10 350 mm².s⁻¹ bei 25°C.

### Beispiel 3:

Beispiel 1 wurde wiederholt mit der Abänderung, daß anstatt einem alpha-omega-bis-Trimethylsilylpolydimethylsiloxan 89,3 Gewichtsteile eines alpha-omega-bis-Hydroxypolydimethylsiloxans mit einer Viscosität von ca. 6.000 mm²/s bei 25°C eingesetzt wurde. Die so erhaltene Masse einer Viscosität von ca. 400.000 mm².s⁻¹ wurde mit einem Methylsiliconöl einer Viscosität von ca. 50 mm²/s bei 50°C (käuflich bei der Wacker-Chemie GmbH als Siliconöl AK 50) auf eine Viscosität von ca. 30.000 mm²/s bei 25°C eingestellt.

### Beispiel 4:

Eine Mischung aus
90 Gewichtsteilen eines alpha-omega-bis-Trimethylsilylpolydimethylsiloxans einer Viscosität von ca. 350 mm²/s bei 25°C,
5 Gewichtsteilen einer pyrogen hergestellten Kieselsäure einer BET-Oberfläche von ca. 300 m²/g und
5 Gewichtsteilen der gemäß B hergestellten Entschäumergrundlage
wurde 2 Stunden lang bei 150°C gehalten und nach dem Abkühlen homogenisiert. Man erhielt ein Antischaummittel einer Viscosität von 11 300 mm²/s bei 25°C.

### Vergleichsbeispiele 1 bis 4:

Eine Mischung aus
95 Gewichtsteilen eines alpha-omega-bis-Trimethylsilylpolydimethylsiloxans einer Viscosität von
350 mm²/s (Vergleichsbeispiel 1) bzw.,
5.000 mm²/s (Vergleichsbeispiele 2 und 4) bzw.
10.000 mm²/s (Vergleichsbeispiel 3)
und
5 Gewichtsteilen einer pyrogen hergestellten Kieselsäure einer BET-Oberfläche von 200 m²/g sowie, ausschließlich in Vergleichsbeispiel 4,
0,1 Gewichtsteile einer 20 Gew.-%igen methanolischen KOH-Lösung
wurde 3 Stunden lang bei 180°C belassen und nach dem Abkühlen homogenisiert.

### Wirkungsbeispiele:

Für die vorstehend aufgeführten Beispiele und Vergleichsbeispiele wurden nach dem oben geschilderten Verfahren jeweils SRF-Werte bestimmt, wobei jeweils 0,1 g des Antischaummittels als 10 Gew.% Lösung in Ethylacetate verwendet wurde. Diese SRF-Werte sind in der folgenden Tabelle aufgeführt. Hierin bedeuten SRF 1 den SRF-Wert bestimmt wie oben angegeben, SRF 2 denbei der ersten, SRF 3 den bei der zweiten Wiederholung des Tests ohne weitere Zugabe von Antischaummittel bestimmten Wert.

**Tabelle**

| Beispiel | SRF1 | SRF2 | SRF3 |
|---|---|---|---|
| 1 | 250 | 220 | 300 |
| 2 | 450 | 560 | 820 |
| 3 | 180 | 200 | 240 |
| 4 | 485 | 510 | 590 |

| Vergleichsbeispiel | | | |
|---|---|---|---|
| 1 | 950 | 1 610 | 2 580 |
| 2 | 800 | 1 450 | 2 160 |
| 3 | 750 | 1 300 | 2 050 |
| 4 | 700 | 1 250 | 1 920 |

Wie bereits erwähnt, ist die entschäumende Wirkung umso stärker, je kleiner der SRF-Wert des jeweiligen Mittels ist.

### Beispiel 5:

4000g einer 55%igen schutzkolloidstabilisierten Polyvinylacetatdispersion
2200g einer 20%igen Lösung von Polyvinylalkohol einer Verseifungszahl von 140 und einer Viskosität von 5 mPa.s bei 20 °C, gemessen an einer 4%igen wäßrigen Lösung
656g eines gemäß Beispiel 1 hergestellten Antischaummittels
wurden in einem Schnellrührwerk (Dissolver) in 3000g Wasser dispergiert.

Die so hergestellte Dispersion wurde in einem Sprühtrockner mit einer Austrittstemperatur von 80°C verdüst und das so erhaltene Pulver (3300g) mit 330g Antiblockmittel (einem Aluminiumsilikat) vermengt.

Die SRF.Werte einer Suspension von 0,075g des auf diese Weise hergestellten Antischaummittels in 200 ml einer 4Gew.%-igen wäßrigen Lösung von Alkylsulfonate betrugen:
SRF1: 1410; SRF2: 1480; SRF3: 1540.

### Vergleichsbeispiel 5:

Beispiel 5 wurde wiederholt mit der Abänderung, daß anstelle des gemäß Beispiel 1 hergestellten Antischaummittels die gleiche Menge des gemäß Vergleichsbeispiel 2 hergestellten Antischaummittels eingesetzt wurde.
Die entsprechend Beipiel 5 ermittelten SRF-Werte betrugen:
SRF1: 2020; SRF2: 2510; SRF3: 2950.

## Patentansprüche (Patentansprüche für folgende(n) Vertragsstaat(en): BE, DE, FR, GB, IT)

1. Verwendung einer Zusammensetzung auf der Grundlage von
a) im wesentlichen linearen Organopolysiloxanen, bei denen in mindestens einem Teil der im wesentlichen linearen Organopolysiloxane zusätzlich zu den SiC-gebundenen organischen Resten gleiche oder verschiedene SiOC-gebundene Reste R' vorliegen,
wobei die Einheiten des im wesentlichen linearen Organopolysiloxans, in dem SiOC-gebundene Reste R' vorliegen, mindestens zu 90 % ihrer Anzahl solche der Formel R₂SiO und R₂(R'O)SiO_{1/2} sind, wobei R gleiche oder verschiedene, einwertige, gegebenenfalls substituierte Kohlenwasserstoffreste, die vorzugsweise 1 bis 18 Kohlenstoffatome je Rest aufweisen, und R' aus Kohlenstoff- und Wasserstoffatomen aufgebaute oder aus Kohlenstoff-, Wasserstoff-und mindestens 2 Sauerstoffatomen je Rest sowie gegebenenfalls auch mindestens einem Si-Atom aufgebaute, SiOC-gebundene Reste mit mindestens 6 Kohlenstoffatomen je Rest bedeuten,
mit der Maßgabe, daß der Anteil vom im wesentlichen linearen Organopolysiloxan, in dem zusätzlich zu den SiC-gebundenen organischen Resten SiOC-gebundene Reste R' vorliegen, 2 bis 95 Gewichtsprozent, bezogen auf das Gesamtgewicht aller in der Zusammensetzung vorhandenen, im wesentlichen linearen Organopolysiloxane, Siliconharz und Füllstoff(e),
beträgt;
b) Siliconharz, bei dem mindestens 90 % der Siloxaneinheiten Einheiten der Formeln R₃SiO_{1/2} und SiO_{4/2} sind, wobei R die oben angegebene Bedeutung besitzt;
c) Füllstoff(en); und
d) bezogen auf das Gewicht von im wesentlichen linearen Organopolysiloxanen, Siliconharz und Füllstoff(en), 0 bis 10 Gew.-% 2,2,4-Trimethyl-1,3-diisobutyryloxypentan;
mit der Maßgabe, daß die Zusammensetzung als Kondensationskatalysator nur LiOH, NaOH, KOH, RbOH oder CsOH in Mengen von 0 bis 1 %, bezogen auf das Gewicht der Zusammensetzung enthält;
wobei die Zusammensetzung herstellbar ist, indem das Siliconharz in einem relativ niedrig siedenden Lösungsmittel gelöst wird, diese Lösung mit Organopolysiloxan, das SiOC-gebundene Reste R' aufweist, vereinigt wird und die so entstandene Mischung destillativ vom Lösungsmittel befreit wird und anschließend mit Füllstoff(en), gegebenenfalls zusätzlich verwendeten Organopolysiloxanen und gegebenenfalls zusätzlich verwendeten Stoffen versetzt wird,
als Antischaummittel.

## Patentansprüche (Patentansprüche für folgende(n) Vertragsstaat(en): AT, CH, LI, NL)

1. Verwendung einer Zusammensetzung auf der Grundlage von
a) im wesentlichen linearen Organopolysiloxanen, bei denen in mindestens einem Teil der im wesentlichen linearen Organopolysiloxane zusätzlich zu den SiC-gebundenen organischen Resten gleiche oder verschiedene SiOC-gebundene Reste R' vorliegen,
wobei die Einheiten des im wesentlichen linearen Organopolysiloxans, in dem SiOC-gebundene Reste R' vorliegen, mindestens zu 90 % ihrer Anzahl solche der Formel R₂SiO und R₂(R'O)SiO_{1/2} sind, wobei R gleiche oder verschiedene, einwertige, gegebenenfalls substituierte Kohlenwasserstoffreste, die vorzugsweise 1 bis 18 Kohlenstoffatome je Rest aufweisen, und R' aus Kohlenstoff- und Wasserstoffatom aufgebaute oder aus Kohlenstoff-, Wasserstoff-und mindestens 2 Sauerstoffatomen je Rest sowie gegebenenfalls auch mindestens einem Si-Atom aufgebaute, SiOC-gebundene Reste mit mindestens 6 Kohlenstoffatomen je Rest bedeuten,
mit der Maßgabe, daß der Anteil vom im wesentlichen linearen Organopolysiloxan, in dem zusätzlich zu den SiC-gebundenen organischen Resten SiOC-gebundene Reste R' vorliegen, 2 bis 95 Gewichtsprozent, bezogen auf das Gesamtgewicht aller in der Zusammensetzung vorhandenen, im wesentlichen linearen Organopolysiloxane, Siliconharz und Füllstoff(e),
beträgt;
b) Siliconharz, bei dem mindestens 90 % der Siloxaneinheiten Einheiten der Formeln R₃SiO_{1/2} und SiO_{4/2} sind, wobei R die oben angegebene Bedeutung besitzt;
c) Füllstoff(en); und
d) bezogen auf das Gewicht von im wesentlichen linearen Organopolysiloxanen, Siliconharz und Füllstoff(en), 0 bis 10 Gew.-% 2,2,4-Trimethyl-1, 3-diisobutyryloxypentan,
als Antischaummittel.

## Claims (Claims for the following Contracting State(s): BE, DE, FR, GB, IT)

1. Use of a composition based on
a) essentially linear organopolysiloxanes in which, in at least one part of the essentially linear organopolysiloxanes and in addition to the SiC-bonded organic radicals, identical or different SiOC-bonded radicals R' are present,
the units of the essentially linear organopolysiloxane in which SiOC-bonded radicals R' are present being to the extent of at least 90% of their number those of the formula R₂SiO and R₂(R'0)SiO_{1/2}, in which R denotes identical or different, monovalent, optionally substituted hydrocarbon radicals which preferably contain from 1 to 18 carbon atoms per radical, and R' denotes radicals composed of carbon and hydrogen atoms or of carbon, hydrogen and at least 2 oxygen atoms per radical and optionally also at least one Si atom, which radicals are bonded via SiOC and have at least 6 carbon atoms per radical,
with the proviso that the proportion of essentially linear organopolysiloxane in which, in addition to the SiC-bonded organic radicals, SiOC-bonded radicals R' are present is from 2 to 95 percent by weight, based on the total weight of all the essentially linear organopolysiloxanes, silicone resin and filler(s) which are present in the composition;
b) silicone resin in which at least 90% of the siloxane units are units of the formulae R₃SiO_{1/2} and SiO_{4/2}, in which R has the meaning given above;
c) filler(s); and
d) from 0 to 10% by weight, based on the weights of essentially linear organopolysiloxanes, silicone resin and filler(s), of 2,2,4-trimethyl-1,3-diisobutyryloxypentane;
with the proviso that the composition contains, as condensation catalyst, only LiOH, NaOH, KOH, RbOB or CsOH in amounts of from 0 to 1%, based on the weight of the composition;
it being possible to prepare the composition by dissolving the silicone resin in a relatively low-boiling solvent, combining this solution with organopolysiloxane containing SiOC-bonded radicals R', removing the solvent from the resulting mixture by distillation and subsequently adding filler(s), organopolysiloxanes which are optionally used in addition and substances which are optionally used in addition,
as antifoam agents.

## Claims (Claims for the following Contracting State(s): AT, CH, LI, NL)

1. Use of a composition based on
a) essentially linear organopolysiloxanes in which, in at least one part of the essentially linear organopolysiloxanes and in addition to the SiC-bonded organic radicals, identical or different SiOC-bonded radicals R' are present,
the units of the essentially linear organopolysiloxane in which SiOC-bonded radicals R' are present being to the extent of at least 90% of their number those of the formula R₂SiO and R₂(R'0)SiO_{1/2}, in which R denotes identical or different, monovalent, optionally substituted hydrocarbon radicals which preferably contain from 1 to 18 carbon atoms per radical, and R' denotes radicals composed of carbon and hydrogen atoms or of carbon, hydrogen and at least 2 oxygen atoms per radical and optionally also at least one Si atom, which radicals are bonded via SiOC and have at least 6 carbon atoms per radical,
with the proviso that the proportion of essentially linear organopolysiloxane in which, in addition to the SiC-bonded organic radicals, SiOC-bonded radicals R' are present is from 2 to 95 percent by weight, based on the total weight of all the essentially linear organopolysiloxanes, silicone resin and filler(s) which are present in the composition;
b) silicone resin in which at least 90% of the siloxane units are units of the formulae R₃SiO_{1/2} and SiO_{4/2}, in which R has the meaning given above;
c) filler(s); and
d) from 0 to 10% by weight, based on the weights of essentially linear organopolysiloxanes, silicone resin and filler(s), of 2,2,4-trimethyl-1,3-diisobutyryloxypentane,
as antifoam agents.

## Revendications (Revendications pour l'(les) Etat(s) contractant(s) suivant(s): BE, DE, FR, GB, IT)

1. Emploi comme produit contre les mousses d'une composition à base de :
a) Organosiloxanes essentiellement linéaires dont au moins une partie comporte, en plus des radicaux organiques en liaisons SiC, des radicaux R' identiques ou différents en liaisons SiOC, les motifs de l'organopolysiloxane linéaire à radicaux R' en liaisons SiOC étant pour au moins 90 % de leur nombre des motifs R₂SiO et R₂(R'O)SiO_{1/2} dont les radicaux R, identiques ou différents, sont des radicaux hydrocarbonés monovalents éventuellement substitués avec chacun de 1 à 18 atomes de carbone de préférence et les radicaux R' sont des radicaux à au moins 6 atomes de carbone en liaisons SiOC, formés d'atomes de carbone et d'hydrogène ou bien de carbone, d'hydrogène et d'au moins 2 atomes d'oxygène et le cas échéant d'au moins un atome de silicium,
avec la condition que la partie de l'organopolysiloxane linéaire ayant des radicaux R' en liaisons SiOC représente de 2 à 95 % du poids total de tous les organopolysiloxanes linéaires, de la résine de silicone et de la charge ou des charges de la composition ;
b) une résine de silicone dont au moins 90 % des motifs siloxanes sont des motifs R₃SiO_{1/2} et SiO_{4/2}, R ayant la signification ci-dessus indiquée ;
c) une ou plusieurs charges ; et
d) par rapport au poids des organopolysiloxanes linéaires, de la résine de silicone et de la charge ou des charges, de 0 à 10 % de 2,2,4-triméthyl-1,3-diisobutyryloxypentane ;
avec la condition que cette composition contienne comme catalyseur de condensation uniquement LiOH, NaOH, KOH, RbOH ou CsOH dans des proportions de 0 à 1 % de son poids ;
composition que l'on peut préparer en dissolvant la résine de silicone dans un solvant à point d'ébullition relativement bas, en mélangeant à la solution l'organopolysiloxane à radicaux R' en liaisons SiOC et en éliminant le solvant du mélange par distillation puis en ajoutant une ou plusieurs charges et le cas échéant d'autres organopolysiloxanes et d'autres matières.

## Revendications (Revendications pour l'(les) Etat(s) contractant(s) suivant(s): AT, CH, LI, NL)

1. Emploi comme produit contre les mousses d'une composition à base de :
a) Organosiloxanes essentiellement linéaires dont au moins une partie comporte, en plus des radicaux organiques en liaisons SiC, des radicaux R' identiques ou différents en liaisons SiOC, les motifs de l'organopolysiloxane linéaire à radicaux R' en liaisons SiOC étant pour au moins 90 % de leur nombre des motifs R₂SiO et R₂(R'O)SiO_{1/2} dont les radicaux R, identiques ou différents, sont des radicaux hydrocarbonés monovalents éventuellement substitués avec chacun de 1 à 18 atomes de carbone de préférence et les radicaux R' sont des radicaux à au moins 6 atomes de carbone en liaisons SiOC, formés d'atomes de carbone et d'hydrogène ou bien de carbone, d'hydrogène et d'au moins 2 atomes d'oxygène et le cas échéant d'au moins un atome de silicium,
avec la condition que la partie de l'organopolysiloxane linéaire ayant des radicaux R' en liaisons SiOC représente de 2 à 95 % du poids total de tous les organopolysiloxanes linéaires, de la résine de silicone et de la charge ou des charges de la composition ;
b) une résine de silicone dont au moins 90 % des motifs siloxanes sont des motifs R₃SiO_{1/2} et SiO_{4/2}, R ayant la signification ci-dessus indiquée ;
c) une ou plusieurs charges ; et
d) par rapport au poids des organopolysiloxanes linéaires, de la résine de silicone et de la charge ou des charges, de 0 à 10 % de 2,2,4-triméthyl-1,3-diisobutyryloxypentane.
